(19) Europäisches Patentamt / European Patent Office / Office européen des brevets

(11) **EP 3 374 119 B1**

(12) **EUROPÄISCHE PATENTSCHRIFT**

(45) Veröffentlichungstag und Bekanntmachung des Hinweises auf die Patenterteilung:
**28.08.2019 Patentblatt 2019/35**

(21) Anmeldenummer: **16794279.6**

(22) Anmeldetag: **07.11.2016**

(51) Int Cl.:
**B23K 11/24** *(2006.01)*  **G08C 17/04** *(2006.01)*

(86) Internationale Anmeldenummer:
**PCT/EP2016/076839**

(87) Internationale Veröffentlichungsnummer:
**WO 2017/080954 (18.05.2017 Gazette 2017/20)**

(54) **VERFAHREN ZUR DATENÜBERTRAGUNG BEI EINER WIDERSTANDSSCHWEISSSTROMQUELLE UND WIDERSTANDSSCHWEISSSTROMQUELLE ZUR DURCHFÜHRUNG DES VERFAHRENS**

METHOD FOR DATA TRANSMISSION IN THE CASE OF A RESISTANCE WELDING CURRENT SOURCE AND RESISTANCE WELDING CURRENT SOURCE FOR CARRYING OUT THE METHOD

PROCÉDÉ DE TRANSMISSION DE DONNÉES DANS UNE SOURCE DE COURANT DE SOUDAGE PAR RÉSISTANCE ET SOURCE DE COURANT DE SOUDAGE PAR RÉSISTANCE POUR LA MISE EN OEUVRE DU PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2015 EP 15193612**

(43) Veröffentlichungstag der Anmeldung:
**19.09.2018 Patentblatt 2018/38**

(73) Patentinhaber: **Fronius International GmbH**
**4643 Pettenbach (AT)**

(72) Erfinder:
• **ARTELSMAIR, Bernhard**
  **4643 Pettenbach (AT)**
• **HÖRTENHUBER, Martin**
  **4653 Eberstalzell (AT)**

(74) Vertreter: **Sonn & Partner Patentanwälte**
**Riemergasse 14**
**1010 Wien (AT)**

(56) Entgegenhaltungen:
EP-A1- 2 913 136    DE-A1-102011 079 827
FR-A1- 2 487 712    US-A1- 2005 056 621

**Beschreibung**

Die Erfindung betrifft ein Verfahren zur Datenübertragung bei einer Widerstandsschweißstromquelle, wobei während eines Schweißbetriebs in einem Inverter mit Inverterschaltelementen Schweißimpulse zyklisch mit einer Schaltfrequenz und einer Impulsdauer erzeugt und an die Primärseite eines Transformators angelegt und an der Sekundärseite des Transformators von einem Gleichrichter mit Gleichrichterschaltelementen zu einem resultierenden Schweißstrom gleichgerichtet werden.

Des Weiteren betrifft die Erfindung eine Widerstandsschweißstromquelle, mit einem Inverter mit Inverterschaltelementen zur Erzeugung von Schweißimpulsen zyklisch mit einer Schaltfrequenz und einer Impulsdauer während eines Schweißbetriebs, welcher Inverter mit der Primärseite eines Transformators verbunden ist, und mit einem mit der Sekundärseite des Transformators verbundenen Gleichrichter mit Gleichrichterschaltelementen zur Erzeugung eines Schweißstroms.

Ein derartiges Verfahren und eine derartige Widerstandsschweißstromquelle sind z.B. aus der US 2005/056621 A1 bekannt.

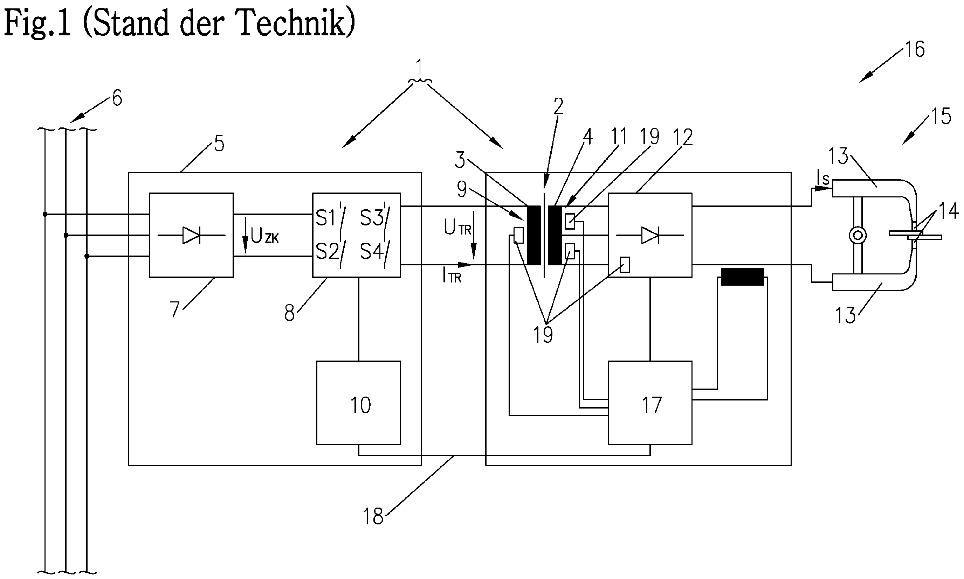

Bekannt sind Widerstandsschweißstromquellen zur Bereitstellung eines Schweißstroms, der einer Schweißzange zugeführt wird. Ein Beispiel für eine bekannte Widerstandsschweißstromquelle mit daran angeschlossener Schweißzange ist in Fig. 1, die ein schematisches Blockschaltbild des Standes der Technik darstellt, gezeigt.

Die Widerstandsschweißstromquelle 1 beinhaltet einen Transformator 2 mit zumindest einer Primärwicklung 3 und zumindest einer Sekundärwicklung 4. Zur Erzeugung des primärseitigen Stroms $I_{TR}$ des Transformators 2 ist ein Leistungsteil 5 vorgesehen, welcher zwischen einem Versorgungsnetz 6 und dem Transformator 2 angeordnet ist. Der Leistungsteil 5 weist dazu einen Primärgleichrichter 7 gekoppelt mit einem Inverter 8 auf. Im Schweißbetrieb legt der Inverter 8 mit Hilfe seiner Inverterschaltelemente S1, S2, S3, S4 Schweißimpulse an die Primärseite 9 des Transformators 2 an. Die Invertersteuerung 10 des Leistungsteils 5 gewährleistet, dass entsprechend dem vorgegebenen Schweißstrom $I_s$ die Schweißimpulse mit einer bestimmten Schaltfrequenz und Impulsdauer erzeugt werden. Der vom Transformator 2 übertragene Strom wird an der Sekundärseite 11 des Transformators 2 von einem Gleichrichter 12 mit Gleichrichterschaltelementen gleichgerichtet und den Zangenarmen 13 bzw. Elektroden 14 der Schweißzange 15 der Widerstandsschweißvorrichtung 16 zugeführt. Zur Steuerung des Gleichrichters 12 ist eine Gleichrichtersteuerung 17 vorgesehen, die entsprechende Steuersignale an die Gleichrichterschaltelemente anlegt. Zudem besteht eine Datenleitung 18 vom Transformator 2 bzw. der Gleichrichtersteuerung 17 zum Leistungsteil 5, um diesem bestimmte Informationen, wie beispielsweise die Temperatur von Transformator 2, Wicklung und oder Gleichrichterschaltelementen zu melden. In Fig. 1 sind beispielsweise Temperatursensoren 19 an Primärwicklung 3, Sekundärwicklung 4 und Gleichrichterschaltelementen angeordnet. Insbesondere bei Überlastung oder Fehlfunktionen können so kostenintensive Schäden an Transformator 2 und sekundärseitigem Gleichrichter 12 vermieden werden. Diese Datenübertragung kann mittels einem Datenbus erfolgen, allerdings wird aufgrund der wenigen Signale und geringer Informationsdichte oft auch nur eine direkte Verbindung zwischen Sensoren und Leistungsteil 5 eingesetzt.

Aufgrund der Amplitude des Schweißstroms $I_s$ im Bereich von üblicherweise einigen kA fallen trotz großer Querschnitte der Leitungen zwischen Transformator und Elektroden entsprechend hohe Ohm'sche Verluste an. Dementsprechend ist der Transformator nahe der Schweißzange, vorteilhafterweise sogar direkt an der Schweißzange angeordnet. Da die Schweißzange üblicherweise an einem Roboter beweglich montiert ist, wird der Leistungsteil getrennt vom Transformator angeordnet. Einerseits damit der Roboter nicht noch zusätzlich mit dem Gewicht des Leistungsteils belastet wird, was unter Umständen geringere Beschleunigungen und damit langsamere Bewegungen verursachen würde. Andererseits wird versucht die Schweißzange so klein wie möglich zu gestalten, um auch bei komplexen Werkstückgeometrien eine gute Zugänglichkeit zu den Schweißpunkten zu erreichen und die Bewegbarkeit des Roboters nicht einzuschränken. Auch deshalb wird die Anordnung des Leistungsteils direkt an der Zange vermieden.

Die Entfernungen zwischen Leistungsteil und Transformator können abhängig von der Gesamtanlage und vom Einsatzgebiet bis zu 20 m betragen und der von den Datenleitungen resultierende Aufwand ist nicht zu vernachlässigen. Außerdem sind diese Datenleitungen zumindest teilweise den rauen Arbeitsbedingungen der Schweißumgebung ausgesetzt, was zu Fehlern in der Übertragung, Beschädigungen und in weiter Folge zu Stillstandzeiten der Anlage führen kann.

Der Erfindung liegt somit die Aufgabe zugrunde, ausgehend vom eingangs geschilderten Stand der Technik, ein Verfahren zur Datenübertragung bei einer Widerstandsschweißstromquelle sowie eine Widerstandsschweißstromquelle zur Durchführung des Verfahrens zu schaffen, die auf Datenleitungen zwischen Leistungsteil und Transformator verzichten können und dennoch hohe Betriebssicherheit gewährleisten.

Die Erfindung löst die gestellte Aufgabe hinsichtlich des Verfahrens dadurch, dass in einem Datenübertragungsmodus in den Pausen des Schweißbetriebs die an der Primärseite des Transformators anliegende Impedanz erhöht wird, von einer Steuereinrichtung Steuerimpulse zum Initialisieren des Datenübertragungsmodus an die Primärseite des Transformators angelegt werden, welche Steuerimpulse an der Sekundärseite des Transformators detektiert werden, worauf die Gleichrichterschaltelemente des sekundärseitigen Gleichrichters entsprechend der zu übertragenden Daten betätigt werden, sodass der Strom an der Primärseite des Transformators mit diesen Daten moduliert wird und somit die Daten über den Transformator übertragen werden.

Wird in einem Datenübertragungsmodus in den Pausen des Schweißbetriebs die an der Primärseite des Transformators anliegende Impedanz erhöht, kann der Übertragungspfad für den Schweißstrom, nämlich Transformator und primärseitige Leitung, auch zur Datenübertragung genutzt werden. Durch die Erhöhung der an der Primärseite des Transformators anliegenden Impedanz werden hohe Ströme im Datenübertragungsmodus effektiv vermieden, wodurch eine Beschädigung der Widerstandsschweißstromquelle durch zu hohe Ströme im Datenübertragungsmodus ausgeschlossen werden kann. Werden zudem von einer Steuereinrichtung Steuerimpulse zum Initialisieren des Datenübertragungsmodus an die Primärseite des Transformators angelegt, welche Steuerimpulse an der Sekundärseite des Transformators detektiert werden, kann an der Sekundärseite festgestellt werden, dass ein Wechsel in den Datenübertragungsmodus erfolgen soll. Ein Signal oder eine Steuerleitung zur Synchronisation der Datenübertragung zwischen Transformator bzw. Gleichrichtersteuerung zu Leistungsteil kann so entfallen. Werden darauf die Gleichrichterschaltelemente des sekundärseitigen Gleichrichters entsprechend der zu übertragenden Daten betätigt, sodass der Strom an der Primärseite des Transformators mit diesen Daten moduliert wird und somit die Daten über den Transformator übertragen werden, kann eine Datenübertragung bei einer Widerstandsschweißstromquelle einfach realisiert werden, ohne dass zusätzliche Datenleitungen benötigt werden. So bewirkt die gleichzeitige Betätigung der Gleichrichterschaltelemente einen sekundärseitigen Kurzschluss, der anhand des Stromanstiegs auf der Primärseite detektiert werden kann. Aufgrund der erfindungsgemäß erhöhten auf der Primärseite anliegenden Impedanz verursacht dieser sekundärseitige Kurzschluss keine derart hohen Ströme, die eine Beschädigung oder gar Zerstörung der Widerstandsschweißstromquelle verursachen könnten. Diese Verwendung der vorhandenen Komponenten wie der Gleichrichterschaltelemente und des vorhandenen Übertragungspfads für den Schweißstrom, nämlich Transformator und primärseitige Leitung, kann den Aufbau der Widerstandsschweißstromquelle bei einer gleichzeitig hohen Betriebssicherheit, für welche die Datenübertragung zwischen Transformator bzw. Gleichrichtersteuerung und Leistungsteil eine Voraussetzung darstellt, durch den Verzicht auf Datenleitungen vereinfachen.

Im Allgemeinen wird festgehalten, dass der Wechsel vom Schweißbetrieb in den Datenübertragungsmodus üblicherweise von einer Steuereinrichtung initiiert wird. Dies kann die Steuerung der Widerstandsschweißstromquelle, insbesondere die Inverstersteuerung, aber auch eine übergeordnete Steuerung, die Widerstandsschweißstromquelle und Schweißzange steuert, sein.

Weiter verbessert werden kann das Verfahren, wenn die Steuerimpulse durch die Betätigung zumindest eines Inverterschaltelement gebildet werden. Die Benutzung zumindest eines Inverterschaltelements sowohl für die Bildung der Schweißimpulse als auch der Steuerimpulse kann den Bauteilaufwand der erfindungsgemäßen Widerstandsschweißstromquelle verringern, wodurch sowohl ein einfacherer, kostengünstiger Aufbau als auch die mit der Datenübertragung erreichte, hohe Betriebssicherheit erzielt werden kann.

Wird die an der Primärseite des Transformators anliegende Impedanz durch Zuschalten zumindest einer Spule erhöht, kann der maximale Strom im Datenübertragungsmodus begrenzt werden. Dabei bietet eine Spule den Vorteil der fertigungstechnisch einfachen Herstellbarkeit einer Impedanz, auch für hohe Ströme. Des Weiteren reduziert die Spule die maximale Stromanstiegsgeschwindigkeit, wodurch auch im Datenübertragungsmodus eine hohe Betriebssicherheit gewährleistet werden kann, insbesondere wenn die Datenübermittlung mittels sekundärseitigem Kurzschluss über die Gleichrichterschaltelemente erfolgt.

Eine vorteilhafte Ausbildung des Verfahrens ergibt sich, wenn im Datenübertragungsmodus die Schaltelemente des sekundärseitigen Gleichrichters mehrfach hintereinander zur Bildung der zu übertragenden Daten betätigt werden. Dies kann die Übertragung von Datenpaketen im Gegensatz zur einfachen binären Information eines einzigen Bits (0 oder 1) ermöglichen. Dabei kann die Betätigung der Gleichrichterschaltelemente mehrfach innerhalb eines Steuerimpulses erfolgen, aber genauso ist die Aufteilung der zu übertragenden Daten auf mehrere Steuerimpulse möglich. Die serielle Datenübertragung kann zum Beispiel asynchron mit Start- und Stoppbit realisiert werden aber auch die Verwendung einer synchronen seriellen Datenübertragung, bei der auf die Steuerimpulse synchronisiert wird, ist vorstellbar.

Der Wechsel in den Datenübertragungsmodus kann auf der Sekundärseite einfach detektiert werden, wenn die Schaltfrequenz der Steuerimpulse zum Initialisieren des Datenübertragungsmodus gegenüber der Schaltfrequenz der Schweißimpulse, insbesondere auf 20kHz bis 50kHz, erhöht wird. Insbesondere wenn die Schaltfrequenz im Datenübertragungsmodus eine im Schweißbetrieb nicht verwendete Schaltfrequenz darstellt, kann der Datenübertragungsmodus sicher erkannt werden. Dies kann in weiterer Folge Beschädigungen der Widerstandsschweißstromquelle, die durch ein fälschliches, gleichzeitiges Betätigen der Gleichrichterschaltelemente zur Datenübertragung im Schweißbetrieb verursacht werden könnten, verhindern.

Werden die Steuerimpulse zum Initialisieren des Datenübertragungsmodus mit einer vordefinierten Impulsdauer, insbesondere 2 µs bis 25 µs, erzeugt, kann dies als ein weiteres Kennzeichen für den Wechsel in den Datenübertragungsmodus herangezogen werden. Zudem kann durch eine kurze Impulsdauer der maximale Strom bzw. die maximale Energie im Datenübertragungsmodus begrenzt werden.

Wird vor der Übertragung von Daten im Datenübertragungsmodus überprüft, ob der sekundärseitige Strom unter einem Grenzwert liegt, kann ein ungewollter Wechsel in den Datenübertragungsmodus während des Schweißbetriebs verhindert werden. Eine Beschädigung der Widerstandsschweißstromquelle durch einen ungewollten Wechsel in den Datenübertragungsmodus kann so unterbunden werden.

Auszeichnen kann sich das Verfahren zur Datenübertragung in einer Widerstandsschweißstromquelle, wenn im Datenübertragungsmodus Messwerte und/oder Herstellerdaten von der Sekundärseite des Transformators zur Primärseite des Transformators übertragen werden. Dies kann beispielsweise die Identifikation des Transformators bzw. der Schweißzange erlauben, da der Transformator üblicherweise an der Schweißzange angebracht ist. In Anlagen, wo der Roboterarm mit unterschiedlichen Schweißzangen bestückt werden kann, kann diese eindeutige Identifikation der Schweißzange bei der Anlagensteuerung nutzbringend eingesetzt werden. Durch die Übertragung von Messwerten kann zudem die Betriebssicherheit der Widerstandsschweißstromquelle erhöht werden, da die Schweißstromquellensteuerung zusätzliche Messwerte und Daten über die Anlage, im Besonderen über den Transformator und sekundärseitigem Gleichrichter, erhält.

Werden im Datenübertragungsmodus an der Sekundärseite des Transformators gemessene Temperaturwerte an die Primärseite des Transformators übertragen, können Überhitzung und Überlastung von Transformator und Gleichrichter verhindert werden, wodurch eine Reduktion der Lebensdauer der Widerstandsschweißstromquelle vermieden werden kann. So könnte auch der Temperaturverlauf an der Sekundärseite, insbesondere von Transformator und Gleichrichterschaltelementen, aufgezeichnet werden, um auf den Gerätezustand rückzuschließen. Eventuell verstopfte Kühlkanäle oder schlechte mechanische bzw. thermische Verbindungen zwischen Kühlkörper und zu überwachenden Transformator und Gleichrichterschaltelementen können vorzeitig detektiert werden.

Die Erfindung löst die gestellte Aufgabe hinsichtlich der Widerstandsschweißstromquelle dadurch, dass eine Einrichtung zur Erhöhung der an der Primärseite des Transformators anliegenden Impedanz in einem Datenübertragungsmodus in den Pausen des Schweißbetriebs vorgesehen ist, eine Steuereinrichtung zur Erzeugung von Steuerimpulsen zur Initialisierung des Datenübertragungsmodus vorgesehen ist, und an der Sekundärseite des Transformators eine Einrichtung zur Erkennung der Steuerimpulse vorgesehen ist, sowie eine Gleichrichtersteuerung, wobei die Gleichrichtersteuerung dazu eingerichtet ist, die Gleichrichterschaltelemente des sekundärseitigen Gleichrichters entsprechend der zu übertragenden Daten zu betätigen, sodass der Strom an der Primärseite des Transformators mit diesen Daten modulierbar ist und somit die Daten über den Transformator übertragbar sind.

Eine derart ausgebildete Widerstandsschweißstromquelle kann relativ einfach und kostengünstig hergestellt werden. Zu den dadurch erzielbaren Vorteilen wird auf die obige Beschreibung des erfindungsgemäßen Verfahrens verwiesen.

Weiter verbessert werden kann die Widerstandsschweißstromquelle, wenn die Steuereinrichtung mit dem Inverter verbunden ist, sodass die Steuerimpulse durch Betätigung zumindest eines Inverterschaltelements erzeugbar sind. Sind zumindest ein Schaltelement und eine Spule zur Erhöhung der an der Primärseite des Transformators anliegenden Impedanz im Datenübertragungsmodus vorgesehen, kann der maximale Strom im Datenübertragungsmodus begrenzt werden. Zwischen Schweißbetrieb und Datenübertragungsmodus kann auf der Sekundärseite einfach unterschieden werden, wenn die Schaltfrequenz der Steuerimpulse zum Initialisieren des Datenübertragungsmodus gegenüber der Schaltfrequenz der Schweißimpulse, insbesondere auf 20 kHz bis 50 kHz, erhöht ist. Die Steuerimpulse zum Initialisieren des Datenübertragungsmodus weisen eine vordefinierte Impulsdauer, insbesondere 2 µs bis 25 µs, auf. Dies kann für die Unterscheidung zwischen Schweißbetrieb und Datenübertragungsmodus herangezogen werden, was wie oben erwähnt Fehlbedienungen, die zu Beschädigungen der Widerstandsschweißstromquelle führen können, unterbinden kann.

Ist an der Sekundärseite des Transformators eine Einrichtung zum Vergleich des Stromes an der Sekundärseite des Transformators mit einem Grenzwert vorgesehen, kann ein unbeabsichtigter Wechsel in den Datenübertragungsmodus während des Schweißbetriebs und daraus resultierende Beschädigungen an der Widerstandsschweißstromquelle verhindert werden.

Bei der Datenübertragung von Leistungsteil zu Transformator bzw. Gleichrichtersteuerung kann sich eine Widerstandsschweißstromquelle vorteilhaft auszeichnen, bei welcher die Steuereinrichtung zur Bildung von Steuerimpulsen unterschiedlicher Impulsdauer im Datenübertragungsmodus zur Übertragung von Daten von der Primärseite zur Sekundärseite des Transformators ausgebildet ist. Die Steuerimpulse unterschiedlicher Impulsdauer können an der Sekundärseite des Transformators detektiert werden und zu Übertragung von Information zur Sekundärseite des Transformators genutzt werden. Die Information kann dabei über die Pulsdauer kodiert werden, zum Beispiel durch zwei unterschiedliche Werte für die Impulsdauer, wobei einer Impulsdauer eine logische Null und der anderen eine logische Eins zugeordnet ist. Binäre Daten jeglicher Art können so übertragen werden. Genauso ist eine Kodierung der Daten mit mehreren unterschiedlichen Werten für die Impulsdauer, die unterschiedliche Bedeutung haben oder auch für als Handshake genutzt werden können, vorstellbar. Der Sekundärseite des Transformators können so Daten und oder Kommandos übermittelt werden.

Auszeichnen kann sich eine Widerstandsschweißstromquelle, wenn an der Sekundärseite des Transformators temperaturempfindliche Schalter vorgesehen sind. Diese Schalter können bei Übertemperatur ansprechen und die entsprechende Information kann im Datenübertragungsmodus an die Primärseite des Transformators zur Steuereinrichtung übertragen werden. Insbesondere bei einem temperaturempfindlichen Schalter ist die zu übertragende Information besonders gering, nämlich nur ein Bit, und kann durch ein einziges Betätigen der beiden Gleichrichterschaltelemente gesendet werden. Bei einer so angezeigten Übertemperatur kann die primärseitige Steuereinrichtung einen neuerlichen Schweißbetrieb verhindern und die Widerstandsschweißstromquelle vor Beschädigung schützen.

Sind an der Sekundärseite des Transformators Temperatursensoren vorgesehen, kann der aktuelle Temperaturwert, aber auch ein aufgezeichneter Maximalwert der Temperatur, an die primärseitige Steuereinrichtung übertragen werden.

Die gegenständliche Erfindung wird nachfolgend unter Bezugnahme auf die Figuren, welche beispielhaft, schematisch und nicht einschränkend vorteilhafte Ausgestaltungen der Erfindung zeigen, näher erläutert. Dabei zeigt

Fig. 1      ein schematisches Blockschaltbild einer Widerstandsschweißvorrichtung des Standes der Technik,

Fig. 2      ein Blockschaltbild einer beispielhaften, erfindungsgemäßen Widerstandsschweißstromquelle,

Fig. 3      ein Blockschaltbild einer alternativen Ausführungsvariante des Leistungsteils der Widerstandsschweißstromquelle,

Fig. 4      die Schweißimpulse im Schweißbetrieb und Steuerimpulse im Datenübertragungsmodus, und

Fig. 5      ein Flussdiagramm eines beispielhaften, erfindungsgemäßen Verfahrensablaufs.

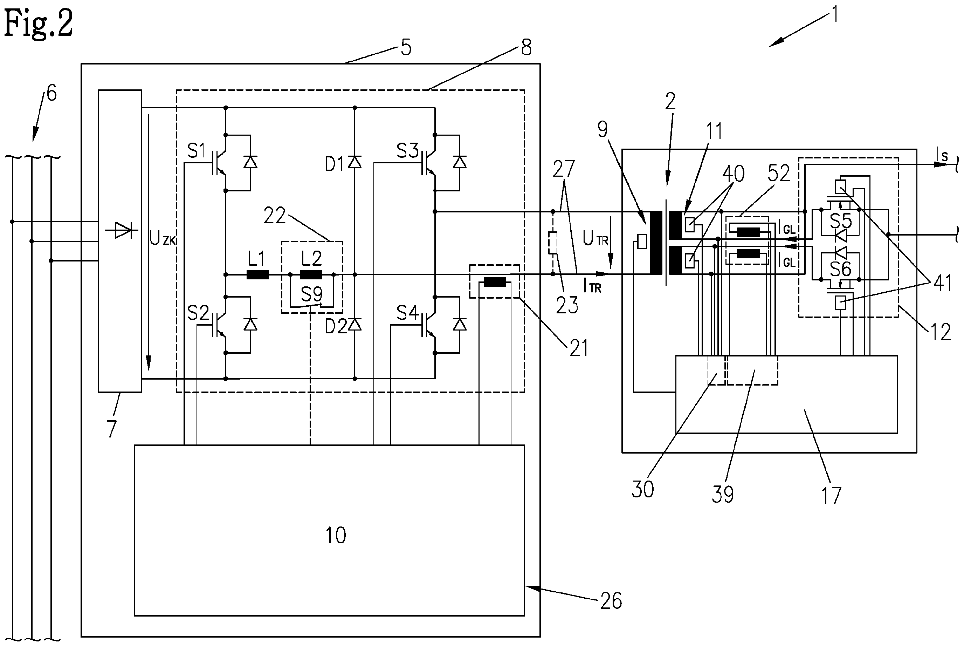

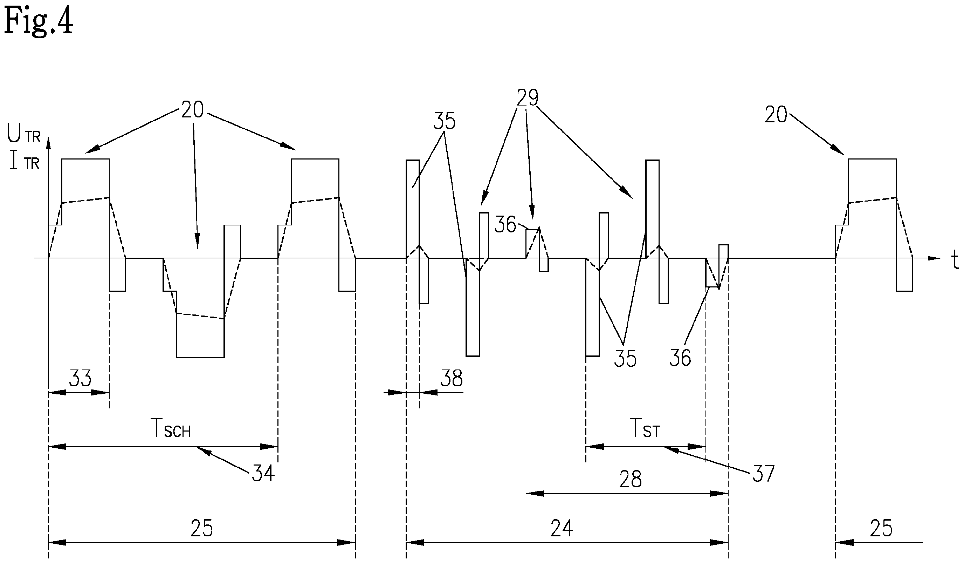

In Fig. 2 wird ein Blockschaltbild einer beispielhaften, erfindungsgemäßen Widerstandsschweißstromquelle 1 gezeigt. Wie erkennbar ist, fehlt gegenüber dem Stand der Technik gemäß Fig. 1 die Datenleitung 18 zwischen Leistungsteil 5 und Transformator 2 bzw. Gleichrichtersteuerung 17. Im Blockschaltbild des Leistungsteils 5 der Widerstandsschweißstromquelle 1 ist der prinzipielle Aufbau des Inverters 8 sichtbar. Um die in Fig. 4 dargestellten Schweißimpulse 20 für die Herstellung von Schweißpunkten mit der Schweißzange 15 zu erzeugen, sind vier Inverterschaltelemente S1, S2, S3, S4 mit Freilaufdioden in einer Brückenschaltung angeordnet. Dabei werden mehrere Schweißimpulse 20 für die Herstellung eines Schweißpunkts benötigt. Zwischen der Herstellung der einzelnen Schweißpunkte sind Pausen vorgesehen, unter anderem um die Schweißzange 15 für den nächsten Schweißpunkt zu positionieren. Im Strompfad zum Transformator 2 befinden sich eine Induktivität L1 zur Begrenzung der maximalen Stromanstiegsgeschwindigkeit sowie eine Messeinrichtung 21 zur Erfassung des aktuellen primären Transformatorstroms $I_{TR}$. Zwei zusätzliche Dioden D1, D2 vervollständigen die Brückenschaltung, um den Stromfluss der Induktivität L1 nach Schaltvorgängen übernehmen zu können.

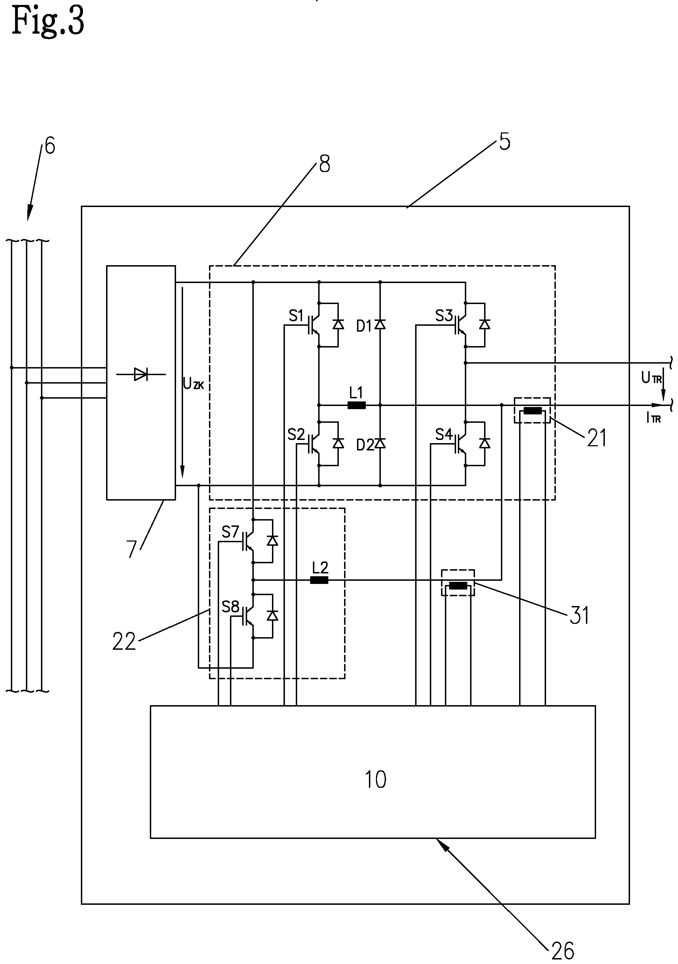

Zusätzlich ist gegenüber Fig. 1, dem Stand der Technik, entsprechend Fig. 2 eine Einrichtung 22 zur Erhöhung der an der Primärseite 9 des Transformators 2 anliegenden Impedanz 23 vorgesehen. Die in Fig. 2 gestrichelt eingezeichnete Impedanz 23 ist dabei nur symbolisch zu verstehen, im Zuge dieser Offenbarung ist damit die Impedanz im Strompfad der Primärseite 9 des Transformators 2 gemeint. Im gezeigten Ausführungsbeispiel nach Fig. 2 entspricht die an der Primärseite 9 des Transformators 2 anliegende Impedanz 23 der Ausgangsimpedanz des Leistungsteils 5. Die Impedanzerhöhung erfolgt in einem Datenübertragungsmodus 24 in den Pausen des Schweißbetriebs 25. In Fig. 4 ist ein Beispiel für den zeitlichen Verlauf von Schweißbetrieb 25 und Datenübertragungsmodus 24 dargestellt. Üblicherweise wird der Datenübertragungsmodus 24 von einer Steuereinrichtung 26 initiiert. Im dargestellten Beispiel nach Fig. 2 bzw. Fig. 3 ist die Steuereinrichtung 26 der Widerstandsschweißstromquelle 1 zugleich die Invertersteuerung 10. Allerdings ist auch vorstellbar, dass eine übergeordnete Anlagensteuerung Widerstandsschweißstromquelle 1, Schweißzange 15 und einen eventuell vorhandenen Roboter gemeinsam steuert und den Datenübertragungsmodus 24 initiiert. Mit der Erhöhung der an der Primärseite 9 des Transformators 2 anliegenden Impedanz 23 kann der Übertragungspfad für den Schweißstrom $I_s$, nämlich Transformator 2 und primärseitige Leitung 27, auch zur Datenübertragung 28 in den Pausen des Schweißbetriebs 25 genutzt werden. Diese Impedanzerhöhung verhindert hohe Ströme im Datenübertragungsmodus 24, wodurch die Lebensdauer der Widerstandsschweißstromquelle 1 erhöht wird. Außerdem ist die Steuereinrichtung 26 in der Lage die in Fig. 4 dargestellten Steuerimpulse 29 zur Initialisierung des Datenübertragungsmodus 24 zu erzeugen. Diese Steuerimpulse 29 werden von einer Einrichtung 30 zur Erkennung der Steuerimpulse 29 an der Sekundärseite 11 des Transformators 2 detektiert. An der Sekundärseite 11 des Transformators 2 wird so der Wechsel in den Datenübertragungsmodus 24 erkennbar, ohne dass eine Signal- oder Steuerleitung zur Synchronisation der Datenübertragung 28 zwischen Transformator 2 bzw. Gleichrichtersteuerung 17 zu Leistungsteil 5 erforderlich ist. Im Datenübertragungsmodus 24 werden dann die Gleichrichterschaltelemente S5, S6 des sekundärseitigen Gleichrichters 12 entsprechend der zu übertragenden Daten betätigt. Die Betätigung der Gleichrichterschaltelemente S5, S6 erfolgt im Allgemeinen über die Gleichrichtersteuerung 17 und bewirkt, dass der Strom $I_{TR}$ an der Primärseite 9 des Transformators 2 mit diesen Daten moduliert wird und somit die Daten über den Transformator 2 übertragen werden. Eine Datenübertragung 28 von der Sekundärseite 11 des Transformators 2 zur Primärseite 9 bzw. zum damit verbundenen Leistungsteil 5 findet so ohne dezidierte Datenleitungen 18 statt. Dabei bewirkt die gleichzeitige Betätigung der Gleichrichterschaltelemente S5, S6 einen sekundärseitigen Kurzschluss, der sich in einem Stromanstieg auf der Primärseite 9 widerspiegelt. Dieser Stromanstieg wird an der Primärseite 9 wahlweise mit einer bereits vorhandenen Messeinrichtung 21 zur Erfassung des primärseitigen Schweißstroms $I_{TR}$ oder mit einer eigens dafür vorgesehenen Messeinrichtung 31, wie in Fig. 3 abgebildet, detektiert und der Steuereinrichtung 26 zugeführt. Diese ermittelt aufgrund der Strommesswerte die von der Sekundärseite 11 gesendeten Daten. Aufgrund der erfindungsgemäß erhöhten Impedanz 23 an der Primärseite 9 verursacht der sekundärseitige Kurzschluss keine derart hohen Ströme, dass eine Beschädigung oder gar Zerstörung der Widerstandsschweißstromquelle 1 verursacht wird. Durch die Verwendung der vorhandenen Komponenten, wie der Gleichrichterschaltelemente S5, S6 und des vorhandenen Übertragungspfads für den Schweißstrom $I_s$, nämlich Transformator 2 und primärseitige Leitung 27, wird der Aufbau der Widerstandsschweißstromquelle 1 bei zugleich hoher Betriebssicherheit vereinfacht. Die hohe Betriebssicherheit und Standfestigkeit der Widerstandsschweißstromquelle 1 wird dabei unter anderem durch die Datenübertragung 28 zwischen Transformator 2 bzw. Gleichrichtersteuerung 17 und Leistungsteil 5 erreicht, da dadurch Überlastungen und Überhitzungen des Transformators 2 und Gleichrichters 12 rechtzeitig erkennbar und verhinderbar sind.

Im gezeigten Ausführungsbeispiel nach Fig. 2 ist die Steuereinrichtung 26 zugleich die Invertersteuerung 10 und daher mit dem Inverter 8 verbunden. Steuerimpulse 29 im Datenübertragungsmodus 24 können so durch Betätigung der Inverterschaltelemente S1, S2, S3 und S4 erzeugt werden. Im Ausführungsbeispiel nach Fig. 2 werden alle vier Inverterschaltelemente S1, S2, S3 und S4 sowohl für die Erzeugung der Schweißimpulse 20 als auch zur Erzeugung der Steuerimpulse 29 verwendet. In einem alternativen Leistungsteil 5 entsprechend Fig. 3 hingegen wird die Einrichtung 22 zur Erhöhung der an der Primärseite 9 des Transformators 2 anliegenden Impedanz 23 gemeinsam mit einer Halbbrücke S3, S4 des Inverters 8 zur Erzeugung der Steuerimpulse 29 im Datenübertragungsmodus 24 verwendet. Jeweils ein Schaltelement S7, S8 der zusätzlichen Halbbrücke schaltet gleichzeitig mit einem Schaltelement S3, S4 des Inverters 8 den Steuerimpuls 29 auf die Primärseite 9 des Transformators 2. Durch diese zumindest teilweise Verwendung der Inverterschaltelemente S1, S2, S3 und S4 im Datenübertragungsmodus 24 wird der Gesamtaufwand an Bauteilen für die Datenübertragung 28 gering gehalten. Diese Anordnung erlaubt auch im Leistungsteil 5 nach Fig. 3, die Messeinrichtung 31 zur Erfassung des Stromanstiegs nicht im Strompfad der Schweißimpulse 20 anzuordnen. Die Messeinrichtung 31 muss daher nicht für die hohen primärseitigen Schweißströme ausgelegt sein und kann daher empfindlicher aufgebaut werden. Dies bewirkt eine höhere Auflösung bei der Stromerfassung und die Verringerung von Fehlern bei der Datenübertragung 28.

Zur Erhöhung der an der Primärseite 9 des Transformators 2 anliegenden Impedanz 23 im Datenübertragungsmodus 24 sind entsprechend Fig. 2 ein Schaltelement S9 und eine Spule L2 vorgesehen. Dabei wird das Schaltelement S9 zum Überbrücken bzw. Kurzschließen der Spule L2 im Schweißbetrieb 25 verwendet. Allerdings sind auch Schaltungsanordnungen gemäß Fig. 3 einsetzbar, bei denen über die beiden Schaltelemente S7, S8 der zusätzlichen Halbbrücke die Spule L2 im Datenübertragungsmodus 24 in den Strompfad geschaltet wird. Auch wenn der Schaltung gemäß Fig. 3 aufwendiger als die in Fig. 2 dargestellte scheint, kann diese durch günstige Schaltelemente S7, S8 für die zusätzliche Halbbrücke überzeugen. Aufgrund der geringeren Ströme im Datenübertragungsmodus 24 können nämlich leistungsschwächere Schaltelemente S7, S8 als beim Inverter 8 bzw. dem Schaltelement S9 zum Überbrücken der Spule L2 wie bei Fig. 2, eingesetzt werden, wodurch der höhere Bauteilaufwand wettgemacht wird. Der maximale Strom im Datenübertragungsmodus 24 wird jedenfalls bei beiden Schaltungsvarianten reduziert. Dabei bietet die Spule L2 zur Erhöhung der Impedanz 23 den Vorteil der fertigungstechnisch einfachen Herstellbarkeit, auch für hohe Ströme. Des Weiteren reduziert die zuschaltbare Spule L2 die maximale Stromanstiegsgeschwindigkeit, was auch im Datenübertragungsmodus 24 eine hohe Betriebssicherheit gewährleisten kann, insbesondere wenn die Datenübertragung 28 mittels sekundärseitigem Kurzschluss über die Gleichrichterschaltelemente S5, S6 erfolgt.

In Fig. 4 ist der zeitliche Verlauf der Spannung $U_{TR}$ und des Stroms $I_{TR}$ (strichliert) an der Primärseite 9 des Transformators 2 dargestellt. Die dargestellten Strom- und Spannungsverläufe zeigen dabei einen beispielhaften zeitlichen Ablauf der Schweißimpulse 20 während des Schweißbetriebs 25 und Steuerimpulse 29 während des Datenübertragungsmodus 24. In dieser vereinfachten Darstellung werden Einschwingvorgänge bewusst nicht gezeigt, da diese nicht erfindungsrelevant sind.

Während des Schweißbetriebs 25 werden die Schweißimpulse 20 vom Inverter 8 generiert. Dabei steigt die Spannung $U_{TR}$ an der Primärseite 9 des Transformators 2 bei leitenden Inverterschaltelementen S1 und S4 oder S2 und S3 über eine Stufe an. Diese Stufe ergibt sich durch den Spannungsabfall an der Spule L1 während der Strom $I_{TR}$ ansteigt bis das Magnetfeld im Transformator 2 aufgebaut ist. Nach diesem Stromanstieg entspricht die Spannung $U_{TR}$ am Transformator 2 beinahe der Zwischenkreisspannung $U_{ZK}$ und der Strom $I_{TR}$ steigt nur mehr entsprechend dem Magnetiesierungstrom der Hauptinduktivität des Transformators 2 weiter an. Dementsprechend nimmt der strichliert dargestellte Strom $I_{TR}$ zu, wird über den Transformator 2 übertragen und als gleichgerichteter Schweißstrom $I_S$ den Elektroden zugeführt. Mittels der Impulsdauer 33 wird die Stärke des gleichgerichteten Schweißstroms $I_S$ geregelt. Werden die Inverterschaltelemente S1, S4 oder S2, S3 mit Ende der Impulsdauer 33 ausgeschaltet, nimmt der Strom $I_{TR}$ ab und induziert eine negative Spannung an der Primärseite 9 des Transformators 2. Als Nächstes werden die anderen Inverterschaltelemente S2 und S3 oder S1 und S4 angesteuert und leitend, wodurch sich der beschriebene Verlauf mit umgekehrten Vorzeichen wiederholt, wonach die Schaltperiode $T_{SCH}$ abgeschlossen ist. Eine typische Periodendauer $T_{SCH}$ für den Schweißbetrieb 25 beträgt etwa 100 µs, was einer Schaltfrequenz 34 von etwa 10 kHz entspricht.

Zwischen der Schweißung zweier Schweißpunkt kann in den Pausen des Schweißbetriebs 25 eine Datenübertragung 28 im Datenübertragungsmodus 24 stattfinden. Die Steuerimpulse 29 des Datenübertragungsmodus 24 sind in Fig. 4 entsprechend dargestellt. Da im Datenübertragungsmodus 24 die Spule L2 zugeschaltet ist, erfolgt der Stromanstieg $I_{TR}$ entsprechen L1, L2 und der Hauptinduktivität des Transformators 2. Je nach Dimensionierung der Spulen L1 und L2 ergibt sich eine Spannung $U_{TR}$ am Transformator 2. Eine mögliche Dimensionierung wäre beispielsweise L1 etwa in der Größenordnung der Streuinduktivität des Transformators 2 zu wählen. L2 hingegen ist beispielsweise um einen Faktor 30 größer als L1 und entspricht etwa einem Drittel der Hauptinduktivität des Transformators 2. Auch hier ergibt sich bei offenen Gleichrichterschaltelementen S5, S6 nach dem Ende des Einschwingvorgangs eine Spannung $U_{TR}$ am Transformator 2, die etwa der Zwischenkreisspannung $U_{ZK}$ entspricht. Dies ist beispielsweise bei den Steuerimpulsen 35 der Fall. Bei den Steuerimpulsen 36 hingegen ist die Sekundärseite 11 des Transformators 2 mit Hilfe der Gleichrichterschaltelemente S5, S6 kurzgeschlossen, was einen stärkeren Stromanstieg verursacht. Gleichzeitig ist die Spannung $U_{TR}$ am Transformator 2 deutlich geringer, da die Hauptinduktivität des Transformators 2 mittels der Gleichrichterschaltelemente S5, S6 kurzgeschlossen ist. Die Spannung $U_{TR}$ beträgt in der gezeigten beispielhaften Implementierung etwa 30% der Zwischenkreisspannung $U_{ZK}$. Der Strom $I_{TR}$ wird von der Steuerung mit der Messeinrichtung 21 oder 31 erfasst. Durch die Auswertung dieser Messwerte können die von der Sekundärseite 11 des Transformators 2 gesendeten Daten rückgewonnen werden und die Datenübertragung 28 erfolgt ohne zusätzliche Datenleitungen 18.

Wie dargestellt, ist die Periodendauer $T_{ST}$ der Steuerimpulse 29 gegenüber der Periodendauer $T_{SCH}$ der Schweißimpulse 20 verkürzt. Im dargestellten Beispiel ergibt sich eine erhöhte Schaltfrequenz 37 der Steuerimpulse 29 von etwa 20 kHz. Insbesondere beim Initialisieren des Datenübertragungsmodus 24 hilft die erhöhte Schaltfrequenz 37 zur Unterscheidung zwischen Schweißbetrieb 25 und Datenübertragungsmodus 24. Wenn nämlich die Schaltfrequenz 37 im Datenübertragungsmodus 24 eine im Schweißbetrieb 25 nicht verwendete Schaltfrequenz darstellt, beispielsweise im Bereich zwischen 20 kHz und 50 kHz, ist der Datenübertragungsmodus 24 eindeutig erkennbar. So können in weiterer Folge Beschädigungen der Widerstandsschweißstromquelle 1, die durch ein gleichzeitiges Betätigen der Gleichrichterschaltelemente S5, S6 zur Datenübertragung 28 im Schweißbetrieb 25 verursacht werden könnten, verhindert werden.

Da die Impulsdauer 38 der Steuerimpulse 29 zum Initialisieren des Datenübertragungsmodus 24 einen vordefinierten Wert besitzt, vorzugsweise im Bereich zwischen 2 µs und 25 µs, ist dies ein weiteres Merkmal für die Unterscheidung zwischen Schweißbetrieb 25 und Datenübertragungsmodus 24. Wie schon oben erwähnt wird mittels dieser Erkennung auf der Sekundärseite 11 des Transformators 2 fehlerhaftes Schalten der Gleichrichterschaltelemente S5, S6, das zu Beschädigungen der Widerstandsschweißstromquelle 1 führen könnte, verhindert.

Im Allgemeinen hängt die Dimensionierung von L1 und L2 natürlich auch von den Schaltfrequenzen 34, 37 und der jeweiligen Impulsdauer 33, 38 ab. Je nach gewünschter Stromanstiegsgeschwindigkeit und Zwischenkreisspannung können L1 und L2 entsprechend

$$U = L\frac{di}{dt}$$ dimensioniert werden.

Zudem ist an der Sekundärseite 11 des Transformators 2 eine Einrichtung 39 zum Vergleich des Stromes $I_{GL}$ an der Sekundärseite 11 des Transformators 2 mit einem Grenzwert vorgesehen. Der Istwert des Stromes $I_{GL}$ wird dazu über eine Srommesseinrichtung 52 erfasst und der Einrichtung 39 zugeführt. Im gezeigten Ausführungsbeispiel nach Fig. 2 ist diese Einrichtung 39 in die Gleichrichtersteuerung 17 integriert. Nur wenn dieser Grenzwert nicht überschritten ist, wird ein Wechsel in den Datenübertragungsmodus 24 der Gleichrichtersteuerung 17 der Sekundärseite 11 eingeleitet. Das stellt eine zusätzliche Sicherheitsmaßnahme dar, um einen unbeabsichtigten Wechsel in den Datenübertragungsmodus 24 während des Schweißbetriebs 25 und daraus resultierende Beschädigungen an der Widerstandsschweißstromquelle 1 zu verhindern.

Für die Datenübertragung 28 von Leistungsteil 5 zu Transformator 2 bzw. Gleichrichtersteuerung 17 werden von der Steuereinrichtung 26 Steuerimpulse 29 unterschiedlicher Impulsdauer 38 erzeugt. So ist im Datenübertragungsmodus 24 auch die Übertragung von Daten von der Primärseite 9 zur Sekundärseite 11 des Transformators 2 möglich. Die Steuerimpulse 29 unterschiedlicher Impulsdauer 38 werden an der Sekundärseite 11 des Transformators 2 detektiert und zu Übertragung von Information zur Sekundärseite 11 des Transformators 2 genutzt. Die Information kann dabei über die Impulsdauer 38 kodiert sein, beispielsweise mit zwei unterschiedlichen Werten für die Impulsdauer 38, wobei eine Impulsdauer 38 eine logische Null und der anderen eine logische Eins zugeordnet ist. Dies erlaubt das Übertragen binärer Daten jeglicher Art. Genauso ist eine Kodierung der Daten mit mehreren unterschiedlichen Werten für die Impulsdauer 38, die unterschiedliche Bedeutung haben oder auch als Handshake genutzt werden können, vorstellbar. Der Sekundärseite 11 des Transformators 2 werden Kommandos, wie beispielsweise "Sende Seriennummer", "Sende maximalen Temperaturwert", "Setze maximalen Temperaturwert zurück", Konfigurationsdaten und dergleichen übermittelt.

Außerdem sind an der Sekundärseite 11 des Transformators 2 temperaturempfindliche Schalter 40 vorgesehen. Diese sind vorzugsweise im Bereich der Transformatorwicklung oder aber auch an den Gleichrichterschaltelementen S5, S6 angeordnet. Die Schalter 40 sprechen bei Übertemperatur an und die dementsprechende Information wird im Datenübertragungsmodus 24 an die Primärseite 9 des Transformators 2 zur Steuereinrichtung 26 übertragen. Vorteilhafterweise ist bei einem temperaturempfindlichen Schalter 40 die zu übertragende Information besonders gering, nämlich nur ein Bit, und kann durch ein einziges Betätigen der beiden Gleichrichterschaltelemente S5, S6 gesendet werden. Bei angezeigter Übertemperatur kann die primärseitige Steuereinrichtung 26 dann einen neuerlichen Schweißbetrieb 25 verhindern und dementsprechend die Widerstandsschweißstromquelle 1 vor Beschädigungen schützen.

Ebenso sind an den Gleichrichterschaltelementen S5, S6 Temperatursensoren 19 vorgesehen. Diese Temperatursensoren 19 können natürlich auch im Bereich der Transformatorwicklung eingesetzt werden. Die Temperatursensoren 19 erlauben die Übertragung der aktuellen Temperaturwerte, aber auch eines aufgezeichneten Maximalwerts der Temperatur, an die primärseitige Steuereinrichtung 26. So kann auch der Temperaturverlauf an der Sekundärseite 11 ausgewertet werden, um auf den Zustand von Transformator 2 und oder Gleichrichterschaltelementen S5, S6 rückzuschließen. Eventuell verstopfte Kühlkanäle oder schlechte mechanische bzw. thermische Verbindungen zwischen Kühlkörper und zu überwachenden Gleichrichterschaltelementen S5, S6 und Transformator 2 werden mittels der Temperatursensoren 19 vorzeitig detektiert. Dauerhafte Schäden können dadurch vermieden werden.

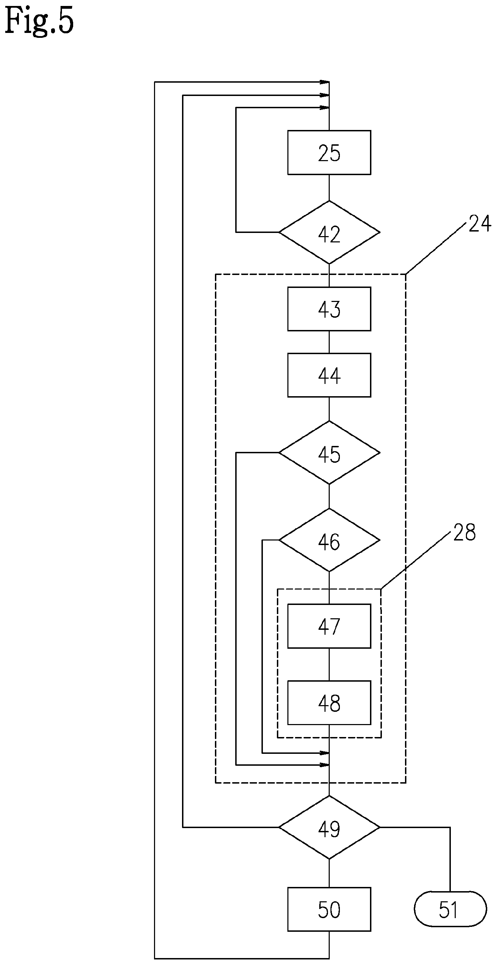

Anhand des Flussdiagramms in Fig. 5 wird ein beispielhafter Ablauf des Verfahrens zur Datenübertragung 28 bei einer Widerstandsschweißstromquelle 1 beschrieben. Um im Schweißbetrieb 25 die, notwendigen, hohen Ströme $I_S$ der Schweißzange 15 zur Verfügung stellen zu können, wird eine gleichgerichtete Eingangsspannung dem Inverter 8 zugeführt. Der Inverter 8 erzeugt während des Schweißbetriebs 25 Schweißimpulse 20 mit einer Schaltfrequenz 34 und einer Impulsdauer 33, die an die Primärseite 9 des Transformators 2 angelegt werden. Dabei bewegt sich die Schaltfrequenz 34 üblicherweise in einem Bereich von 1 kHz bis 15 kHz, während die Impulsdauer 33 vom zu schweißenden Werkstück bzw. erforderlichem Schweißstrom $I_S$ abhängig ist. Die übertragenen Schweißimpulse 20 werden dann an der Sekundärseite 11 des Transformators 2 von Gleichrichterschaltelementen S5, S6 eines Gleichrichters 12 zu einem resultierenden Schweißstrom $I_S$ gleichgerichtet. Dabei wird der Schweißvorgang von einer Steuereinrichtung 26 überwacht und gesteuert, die im gezeigten Ausführungsbeispiel innerhalb der Widerstandsschweißstromquelle 1 angeordnet ist und gleichzeitig die Invertersteuerung 10 durchführt. Abhängig von der Anlagenkonfiguration kann der Schweißvorgang aber auch mit einer übergeordneten Anlagensteuerung, die mit der Invertersteuerung 10 Daten und Befehle austauscht, gesteuert werden. Ist der aktuelle Schweißpunkt fertiggestellt, kann diese Steuereinrichtung 26 in Pausen des Schweißbetriebs 25 den Übergang in den Datenübertragungsmodus 24 initiieren. Dazu wird eine Abfrage 42, ob Daten von der Sekundärseite 11 des Transformators 2 bzw. der sekundärseitigen Gleichrichtersteuerung 17 erfasst werden sollen, durchgeführt. Sollen Daten übertragen werden, wird in einem Schritt 43 zum Übergang in den Datenübertragungsmodus 24 die an der Primärseite 9 des Transformators 2 anliegende Impedanz 23 erhöht. Zudem werden in einem weiteren Schritt 44 von der Steuereinrichtung 26 Steuerimpulse 29 zum Initialisieren des Datenübertragungsmodus 24 an die Primärseite 9 des Transformators 2 angelegt. Daraufhin werden die Steuerimpulse 29 an der Sekundärseite 11 des Transformators 2 detektiert. Dies erfolgt im gezeigten Ausführungsbeispiel mittels der sekundären Gleichrichtersteuerung 17. Die Erkennung 45 des Datenübertragungsmodus 24 kann beispielsweise über die Schaltfrequenz 37 und oder die Impulsdauer 38 durchgeführt werden. Aber auch die Verwendung der Amplitude der Transformatorspannung $U_{TR}$ als Unterscheidungskriterium zum Schweißbetrieb 25 ist vorstellbar. In einer optionalen Abfrage 46 können noch verschiedene andere Kriterien, die weiter unten näher beschrieben werden, überprüft werden, um sicherzustellen, dass sich die Widerstandsschweißstromquelle 1 im Datenübertragungsmodus 24 befindet. Sind die Bedingungen erfüllt, werden für die Datenübertragung 28 die Gleichrichterschaltelemente S5, S6 des sekundärseitigen Gleichrichters 12 entsprechend der zu übertragenden Daten im Schritt 47 betätigt. Die gleichzeitige Betätigung der Gleichrichterschaltelemente S5, S6 bewirkt einen sekundärseitigen Kurzschluss des Transformators 2. Dies moduliert den Strom $I_{TR}$ an der Primärseite 9 des Transformators 2 mit den zu übertragenden Daten und somit werden die Daten über den Transformator 2 übertragen. Dabei verhindert die erfindungsgemäß erhöhte, auf der Primärseite 9 anliegende Impedanz 23 zu hohe Ströme, die eine Beschädigung oder gar Zerstörung der Widerstandsschweißstromquelle 1 verursachen könnten. Der Stromanstieg auf der Primärseite 9 wird im nächsten Schritt 48 detektiert und ausgewertet. In der Abfrage 49 wird eine eventuelle Fehlermeldung von der Sekundärseite 11 des Transformators 2 bzw. der Gleichrichtersteuerung 17 erkannt und dementsprechend eine Fehlerbehandlung durchgeführt. Dies kann eine Warnung 50 an einen Operator darstellen, aber ebenso ist auch vorstellbar, die Rückkehr in den Schweißbetrieb 25 zu blockieren und im Fehlerzustand 51 zu bleiben. Andernfalls erfolgt die Rückkehr in den Schweißbetrieb 25 und die Widerstandsschweißstromquelle 1 ist für den nächsten Schweißpunkt bereit. So erlaubt dieses Verfahren die Verwendung vorhandener Komponenten, wie der Gleichrichterschaltelemente S5, S6 und des vorhandenen Übertragungspfads für den Schweißstrom $I_S$, nämlich Transformator 2 und primärseitige Leitung 27 zur Datenübertragung 28. Dementsprechend vereinfacht sich der Gesamtaufbau, da auf Datenleitungen 18 zwischen sekundärseitiger Gleichrichtersteuerung 17 bzw. Sekundärseite 11 des Transformators 2 und Leistungsteil 5 verzichtet werden kann.

Zur Übertragung von Datenpaketen werden die Schaltelemente S5, S6 des sekundärseitigen Gleichrichters 12 mehrfach hintereinander zur Bildung der zu übertragenden Daten betätigt. Dabei kann die Betätigung der Gleichrichterschaltelemente S5, S6 mehrfach innerhalb eines Steuerimpulses 35, 36 erfolgen, aber genauso ist die Aufteilung der zu übertragenden Daten auf mehrere Steuerimpulse 35, 36 möglich. Da erfindungsgemäß nur die eine vorhandene Leitung 27 zur Datenübertragung 28 verfügbar ist, hat die Datenübertragung 28 von Datenpaketen seriell zu erfolgen. Die serielle Datenübertragung 28 kann beispielsweise asynchron mit Start- und Stoppbit realisiert werden aber auch eine synchrone serielle Datenübertragung 28, bei der beispielsweise auf bestimmte Steuerimpulse 35, 36 synchronisiert wird, ist einsetzbar. So ist beim Ausführungsbeispiel nach Fig. 4 eine Datenübertragung 28 mit 4 Bit erkennbar. Davor werden 2 Steuerimpulse 35 zur Erkennung und Synchronisation des Datenübertragungsmodus 24 genutzt. Natürlich ist das Verfahren auch mit beliebigen anderen Bitlängen bzw. Datenpaketgrößen einsetzbar. Ebenso ist vorstellbar, dass der erste Steuerimpuls 36 mit betätigten Gleichrichterschaltelementen S5, S6 zur Synchronisation verwendet wird.

Wie schon weiter oben erwähnt, kann der Wechsel in den Datenübertragungsmodus 24 auf der Sekundärseite 11 durch das Überprüfen verschiedener Abfragen 46 erkannt werden. Wenn die Schaltfrequenz 37 der Steuerimpulse 29 zum Initialisieren des Datenübertragungsmodus 24 gegenüber der Schaltfrequenz 34 der Schweißimpulse 20 erhöht wird, ist dies auf der Sekundärseite 11 von der Gleichrichtersteuerung 17 erkennbar. Beispielsweise liegt die übliche Schaltfrequenz 34 der der Schweißimpulse 20 im Bereich zwischen 1 und 15 kHz. Zum Initialisieren des Datenübertragungsmodus 24 wird die Schaltfrequenz 37 erhöht, beispielsweise in den Bereich zwischen 20 kHz und 50 kHz. Leicht erkennbar ist dieser Wechsel in den Datenübertragungsmodus 24, wenn die erhöhte Schaltfrequenz 37 eine Schaltfrequenz darstellt, die im Schweißbetrieb 25 nicht verwendet wird. Ein sicheres Erkennen des Datenübertragungsmodus 24 wird so gewährleistet, was in weiterer Folge Beschädigungen der Widerstandsschweißstromquelle 1, die durch ein gleichzeitiges Betätigen der Gleichrichterschaltelemente S5, S6 zur Datenübertragung 28 im Schweißbetrieb 25 verursacht werden könnten, verhindert.

Auch Steuerimpulse 29 mit einer vordefinierten Impulsdauer 38 sind zum Initialisieren des Datenübertragungsmodus 24 geeignet. Diese vordefinierte Impulsdauer 38 kann als weiteres Kriterium für den Wechsel in den Datenübertragungsmodus 24 herangezogen werden.

Zudem wird vor der Übertragung von Daten im Datenübertragungsmodus 24 überprüft, ob der sekundärseitige Strom $I_{GL}$ unter einem Grenzwert liegt. Ein durch eine Fehlfunktion bedingter Wechsel in den Datenübertragungsmodus 24 während des Schweißbetriebs 25 wird damit unterbunden, was eine Beschädigung der Widerstandsschweißstromquelle 1 verhindert.

Vorzugsweise werden im Datenübertragungsmodus 24 Messwerte und/oder Herstellerdaten von der Sekundärseite 11 des Transformators 2 zur Primärseite 9 des Transformators 2 übertragen. Herstellerdaten können beispielsweise die Identifikation des Transformators 2 bzw. der Schweißzange 15 erlauben, da der Transformator 2 üblicherweise an der Schweißzange 15 angebracht ist. In Anlagen, wo der Roboterarm mit unterschiedlichen Schweißzangen 15 bestückt werden kann, kann diese eindeutige Identifikation der Schweißzange 15 bei der Anlagensteuerung von Nutzen sein. Durch die Übertragung von Messwerten wird zudem die Betriebssicherheit der Widerstandsschweißstromquelle 1 erhöht, da die Steuereinrichtung 26 so zusätzliche Messwerte und Daten über die Anlage, im Besonderen über den Transformator 2 und sekundärseitigem Gleichrichter 12, erhält.

**Patentansprüche**

1. Verfahren zur Datenübertragung (28) bei einer Widerstandsschweißstromquelle (1), wobei während eines Schweißbetriebs (25) in einem Inverter (8) mit Inverterschaltelementen (S1, S2, S3, S4) Schweißimpulse (20) zyklisch mit einer Schaltfrequenz (34) und einer Impulsdauer (33) erzeugt und an die Primärseite (9) eines Transformators (2) angelegt und an der Sekundärseite (11) des Transformators (2) von einem Gleichrichter (12) mit Gleichrichterschaltelementen (S5, S6) zu einem resultierenden Schweißstrom ($I_S$) gleichgerichtet werden, **dadurch gekennzeichnet, dass** in einem Datenübertragungsmodus (24) in den Pausen des Schweißbetriebs (25) die an der Primärseite (9) des Transformators (2) anliegende Impedanz (23) erhöht wird, von einer Steuereinrichtung (26) Steuerimpulse (29)

zum Initialisieren des Datenübertragungsmodus (24) an die Primärseite (9) des Transformators (2) angelegt werden, welche Steuerimpulse (29) an der Sekundärseite (11) des Transformators (2) detektiert werden, worauf die Gleichrichterschaltelemente (S5, S6) des sekundärseitigen Gleichrichters (12) entsprechend der zu übertragenden Daten betätigt werden, sodass der Strom ($I_{TR}$) an der Primärseite (9) des Transformators (2) mit diesen Daten moduliert wird und somit die Daten über den Transformator (2) übertragen werden.

2. Verfahren nach Anspruch 1, **dadurch gekennzeichnet, dass** die Steuerimpulse (29) durch die Betätigung zumindest eines Inverterschaltelements (S1, S2, S3, S4) gebildet werden.

3. Verfahren nach Anspruch 1 oder 2, **dadurch gekennzeichnet, dass** die an der Primärseite (9) des Transformators (2) anliegende Impedanz (23) durch Zuschalten zumindest einer Spule (L2) erhöht wird.

4. Verfahren nach einem der Ansprüche 1 bis 3, **dadurch gekennzeichnet, dass** im Datenübertragungsmodus (24) die Schaltelemente (S5, S6) des sekundärseitigen Gleichrichters (12) mehrfach hintereinander zur Bildung der zu übertragenden Daten betätigt werden.

5. Verfahren nach einem der Ansprüche 1 bis 4, **dadurch gekennzeichnet, dass** die Schaltfrequenz (37) der Steuerimpulse (29) zum Initialisieren des Datenübertragungsmodus (24) gegenüber der Schaltfrequenz (34) der Schweißimpulse (20) insbesondere auf 20kHz bis 50kHz erhöht wird und bzw. oder die Steuerimpulse (29) zum Initialisieren des Datenübertragungsmodus (24) mit einer vordefinierten Impulsdauer (38), insbesondere 2 $\mu$s bis 25 $\mu$s, erzeugt werden.

6. Verfahren nach einem der Ansprüche 1 bis 5, **dadurch gekennzeichnet, dass** vor der Übertragung (28) von Daten im Datenübertragungsmodus (24) überprüft wird, ob der sekundärseitige Strom ($I_{GL}$) unter einem Grenzwert liegt.

7. Verfahren nach einem der Ansprüche 1 bis 6, **dadurch gekennzeichnet, dass** im Datenübertragungsmodus (24) Messwerte und/oder Herstellerdaten von der Sekundärseite (11) des Transformators (2) zur Primärseite (9) des Transformators (2) übertragen werden.

8. Verfahren nach einem der Ansprüche 1 bis 7, **dadurch gekennzeichnet, dass** im Datenübertragungsmodus (24) an der Sekundärseite (11) des Transformators (2) gemessene Temperaturwerte an die Primärseite (9) des Transformators (2) übertragen werden.

9. Widerstandsschweißstromquelle (1), mit einem Inverter (8) mit Inverterschaltelementen (S1, S2, S3, S4) zur Erzeugung von Schweißimpulsen (20) zyklisch mit einer Schaltfrequenz (34) und einer Impulsdauer (33) während eines Schweißbetriebs (25), welcher Inverter (8) mit der Primärseite (9) eines Transformators (2) verbunden ist, und mit einem mit der Sekundärseite (11) des Transformators (2) verbundenen Gleichrichter (12) mit Gleichrichterschaltelementen (S5, S6) zur Erzeugung eines Schweißstroms ($I_S$), **dadurch gekennzeichnet, dass** eine Einrichtung (22) zur Erhöhung der an der Primärseite (9) des Transformators (2) anliegenden Impedanz (23) in einem Datenübertragungsmodus (24) in den Pausen des Schweißbetriebs (25) vorgesehen ist, eine Steuereinrichtung (26) zur Erzeugung von Steuerimpulsen (29) zur Initialisierung des Datenübertragungsmodus (24) vorgesehen ist, und an der Sekundärseite (11) des Transformators (2) eine Einrichtung (30) zur Erkennung der Steuerimpulse (29) vorgesehen ist, sowie eine Gleichrichtersteuerung (17), wobei die Gleichrichtersteuerung (17) dazu eingerichtet ist, die Gleichrichterschaltelemente (S5, S6) des sekundärseitigen Gleichrichters (12) entsprechend der zu übertragenden Daten zu betätigen, sodass der Strom ($I_{TR}$) an der Primärseite (9) des Transformators (2) mit diesen Daten modulierbar ist und somit die Daten über den Transformator übertragbar sind.

10. Widerstandsschweißstromquelle (1) nach Anspruch 9, **dadurch gekennzeichnet, dass** die Steuereinrichtung (26) mit dem Inverter (8) verbunden ist, sodass die Steuerimpulse (29) durch Betätigung zumindest eines Inverterschaltelements (S1, S2, S3, S4) erzeugbar sind.

11. Widerstandsschweißstromquelle (1) nach Anspruch 9 oder 10, **dadurch gekennzeichnet, dass** zumindest ein Schaltelement (S7, S8, S9) und eine Spule (L2) zur Erhöhung der an der Primärseite (9) des Transformators (2) anliegenden Impedanz (23) im Datenübertragungsmodus (24) vorgesehen sind.

12. Widerstandsschweißstromquelle (1) nach einem der Ansprüche 9 bis 11, **dadurch gekennzeichnet, dass** die Schaltfrequenz (37) der Steuerimpulse (29) zum Initialisieren des Datenübertragungsmodus (24) gegenüber der Schaltfrequenz (34) der Schweißimpulse (20), insbesondere auf 20 kHz bis 50 kHz, erhöht ist, und bzw. oder die Steuerimpulse (29) zum Initialisieren des Datenübertragungsmodus (24) eine vordefinierte Impulsdauer (38), insbesondere 2 $\mu$s bis 25 $\mu$s, aufweisen.

13. Widerstandsschweißstromquelle (1) nach einem der Ansprüche 9 bis 12, **dadurch gekennzeichnet, dass** an der Sekundärseite (11) des Transformators (2) eine Einrichtung (39) zum Vergleich des Stromes ($I_{GL}$) an der Sekundärseite (11) des Transformators (2) mit einem Grenzwert vorgesehen ist.

14. Widerstandsschweißstromquelle (1) nach einem der Ansprüche 9 bis 13, **dadurch gekennzeichnet, dass** die Steuereinrichtung (26) zur Bildung von Steuerimpulsen (29) unterschiedlicher Impulsdauer (38) im Datenübertragungsmodus (24) zur Übertragung (28) von Daten von der Primärseite (9) zur Sekundärseite (11) des Transformators (2) ausgebildet ist.

15. Widerstandsschweißstromquelle (1) nach einem der Ansprüche 9 bis 14, **dadurch gekennzeichnet, dass** an der Sekundärseite (11) des Transformators (2) temperaturempfindliche Schalter (40) und bzw. oder Temperatursensoren (19) vorgesehen sind.

## Claims

1. Method of data transmission (28) in a resistance welding current source (1), welding pulses (20) being generated cyclically at a switching frequency (34) and a pulse duration (33) in an inverter (8) during a welding operation (25), which inverter has inverter switching elements (S1, S2, S3, S4), and being applied to the primary side (9) of a transformer (2) and being rectified to a resulting welding current ($I_S$) on the secondary side (11) of the transformer (2) by means of a rectifier (12) which has rectifier switching elements (S5, S6), **characterised in that**, in a data transmission mode (24) in the pauses of the welding operation (25), the impedance (23) applied on the primary side (9) of the transformer (2) is increased, control pulses (29) for initialising the data transmission mode (24) are applied to the primary side (9) of the transformer (2) by a control device (26), which control pulses (29) are detected on the secondary side (11) of the transformer (2), whereupon the rectifier switching elements (S5, S6) of the secondary-side rectifier (12) are actuated according to the data to be transmitted such that the current ($I_{TR}$) on the primary side (9) of the transformer (2) is modulated using these data and the data are thereby transmitted via the transformer (2).

2. Method according to claim 1, **characterised in that** the control pulses (29) are formed by the actuation of at least one inverter switching element (S1, S2, S3, S4).

3. Method according to either claim 1 or claim 2, **characterised in that** the impedance (23) applied on the primary side (9) of the transformer (2) is increased by connecting at least one coil (L2).

4. Method according to any of claims 1 to 3, **characterised in that**, in the data transmission mode (24), the switching elements (S5, S6) of the secondary-side rectifier (12) are actuated multiple times in succession in order to form the data to be transmitted.

5. Method according to any of claims 1 to 4, **characterised in that** the switching frequency (37) of the control pulses (29) for initialising the data transmission mode (24) is increased relative to the switching frequency (34) of the welding pulses (20), in particular to 20 kHz to 50 kHz, and/or the control pulses (29) for initialising the data transmission mode (24) are generated at a predefined pulse duration (38), in particular 2 $\mu$s to 25 $\mu$s.

6. Method according to any of claims 1 to 5, **characterised in that**, before the transmission (28) of data in the data transmission mode (24), it is checked whether the secondary-side current ($I_{GL}$) is below a limit value.

7. Method according to any of claims 1 to 6, **characterised in that**, in the data transmission mode (24), measured values and/or manufacturer data are transmitted from the secondary side (11) of the transformer (2) to the primary side (9) of the transformer (2).

8. Method according to any of claims 1 to 7, **characterised in that**, in the data transmission mode (24), temperature values measured on the secondary side (11) of the transformer (2) are transmitted to the primary side (9) of the transformer (2).

9. Resistance welding current source (1), comprising an inverter (8) which has inverter switching elements (S1, S2, S3, S4) for cyclically generating welding pulses (20) at a switching frequency (34) and a pulse duration (33) during a welding operation (25), which inverter (8) is connected to the primary side (9) of a transformer (2), and to a rectifier (12) which has rectifier switching elements (S5, S6) for generating a welding current ($I_s$) and is connected to the secondary side (11) of the transformer (2), **characterised in that** a device (22) is provided for increasing the impedance (23) applied on the primary side (9) of the transformer (2) in a data transmission mode (24) in the pauses of the welding operation (25), a control device (26) is provided for generating control pulses (29) for initialising the data transmission mode (24), and a device (30) for detecting the control pulses (29) is provided on the secondary side (11) of the transformer (2), and a rectifier controller (17), the rectifier controller (17) being designed to actuate the rectifier switching elements (S5, S6) of the secondary-side rectifier (12) according to the data to be transmitted such that the current ($I_{TR}$) on the primary side (9) of the transformer (2) can be modulated using these data and the data can thereby be transmitted via the transformer.

10. Resistance welding current source (1) according to claim 9, **characterised in that** the control device (26) is connected to the inverter (8) such that the control pulses (29) can be generated by actuating at least one inverter switching element (S1, S2, S3, S4).

11. Resistance welding current source (1) according to either claim 9 or claim 10, **characterised in that** at least one switching element (S7, S8, S9) and one coil (L2) are provided for increasing the impedance (23) applied on the primary side (9) of the transformer (2) in the data transmission mode (24).

12. Resistance welding current source (1) according to any of claims 9 to 11, **characterised in that** the switching frequency (37) of the control pulses (29) for initialising the data transmission mode (24) is increased relative to the switching frequency (34) of the welding pulses (20), in particular to 20 kHz to 50 kHz, and/or the control pulses (29) for initialising the data transmission mode (24) have a predefined pulse duration (38), in particular 2 $\mu$s to 25 $\mu$s.

13. Resistance welding current source (1) according to any of claims 9 to 12, **characterised in that** a device (39) for comparing the current ($I_{GL}$) on the secondary side (11) of the transformer (2) with a limit value is provided on the secondary side (11) of the transformer (2).

14. Resistance welding current source (1) according to any of claims 9 to 13, **characterised in that** the control device (26) is designed to form control pulses (29) of different pulse durations (38) in the data transmission mode (24), in order to transmit (28) data from the primary side (9) to the secondary side (11) of the transformer (2).

15. Resistance welding current source (1) according to any of claims 9 to 14, **characterised in that** temperature-sensitive switches (40) and/or temperature sensors (19) are provided on the secondary side (11) of the transformer (2).

**Revendications**

1. Procédé de transmission de données (28) dans une source de courant de soudure par résistance (1), dans lequel, pendant un fonctionnement de soudure (25), dans un inverseur (8) avec des éléments de commutation inverseurs (S1, S2, S3, S4), des impulsions de soudure (20) sont générées de manière cyclique avec une fréquence de commutation (34) et une durée d'impulsion (33) et appliquées au côté primaire (9) d'un transformateur (2) et redressées au niveau du côté secondaire (11) du transformateur (2) par un redresseur (12) avec des éléments de commutation redresseurs (S5, S6) afin d'obtenir un courant de soudure ($I_S$), **caractérisé en ce que**, dans un mode de transmission de données (24), pendant les pauses du fonctionnement de soudure (25), l'impédance (23) appliquée au côté primaire (9) du transformateur (2) est augmentée, des impulsions de commande (29) pour l'initialisation du mode de transmission de données (24) sont appliquées au côté primaire (9) du transformateur (2) par un dispositif de commande (26), ces impulsions de commande (29) étant détectées au niveau du côté secondaire (11) du transformateur (2), les éléments de commutation redresseurs (S5, S6) du redresseur (12) côté secondaire étant alors actionnés en fonction des données à transmettre, de façon à ce que le courant ($I_{TR}$) au niveau du côté primaire (9) du transformateur (2) soit modulé avec ces données et que les données soient donc transmises par l'intermédiaire du transformateur (2).

2. Procédé selon la revendication 1, **caractérisé en ce que** les impulsions de commande (29) sont générées par l'actionnement d'au moins un élément de commutation inverseur (S1, S2, S3, S4).

3. Procédé selon la revendication 1 ou 2, **caractérisé en ce que** l'impédance (23) appliquée au côté primaire (9) du transformateur (2) est augmentée par l'activation d'au moins une bobine (L2).

4. Procédé selon l'une des revendications 1 à 3, **caractérisé en ce que**, dans le mode de transmission de données (24), les éléments de commutation (S5, S6) du redresseur (12) côté secondaire sont actionnés plusieurs fois les uns après les autres pour la formation des données à transmettre.

5. Procédé selon l'une des revendications 1 à 4, **caractérisé en ce que** la fréquence de commutation (37) des impulsions de commande (29) pour l'initialisation du mode de transmission de données (24) est augmentée par rapport à la fréquence de commutation (34) des impulsions de soudure (20), plus particulièrement jusqu'à 20 kHz à 50 kHz et/ou les impulsions de commande (29) pour l'initialisation du mode de transmission de données (24) sont générées avec une durée d'impulsion (38) prédéfinie, plus particulièrement de 2 $\mu$s à 25 $\mu$s.

6. Procédé selon l'une des revendications 1 à 5, **caractérisé en ce que**, avant la transmission (28) de données dans le mode de transmission de données (24), il est vérifié si le courant côté secondaire ($I_{GL}$) se trouve en dessous d'une valeur limite.

7. Procédé selon l'une des revendications 1 à 6, **caractérisé en ce que**, dans le mode de transmission de données (24), des valeurs de mesure et/ou les données du fabricant sont transmises du côté secondaire (11) du transformateur (2) vers le côté primaire (9) du transformateur (2).

8. Procédé selon l'une des revendications 1 à 7, **caractérisé en ce que**, dans le mode de transmission de données (24), les valeurs de température mesurées au niveau du côté secondaire (11) du transformateur (2) sont transmises au côté primaire (9) du transformateur (2).

9. Source de courant de soudure par résistance (1), avec un inverseur (8) avec des éléments de commutation inverseurs (S1, S2, S3, S4) pour la production d'impulsions de soudure (20) de manière cyclique avec une fréquence de commutation (34) et une durée d'impulsion (33) pendant un fonctionnement de soudure (25), cet inverseur (8) étant relié au côté primaire (9) d'un transformateur (2) et à un redresseur (12), relié au côté secondaire (11) du transformateur (2), avec des éléments de commutation redresseurs (S5, S6) pour la production d'un courant de soudure ($I_S$), **caractérisé en ce qu'**un dispositif (22) est prévu pour l'augmentation de l'impédance (23) appliquée au côté primaire (9) du transformateur (2) dans un mode de transmission de données (24) pendant les pauses du fonctionnement de soudure (25), un dispositif de commande (26) est prévu pour la production d'impulsions de commande (29) pour l'initialisation du mode de transmission de données (24) et, au niveau du côté secondaire (11) du transformateur (2), un dispositif (30) est prévu pour la détection des impulsions de commande (29) ainsi qu'une commande de redresseur (17), la commande de redresseur (17) étant conçue pour actionner les éléments de commutation redresseurs (S5, S6) du redresseur côté secondaire (12) en fonction des données à transmettre, de façon à ce que le courant ($I_{TR}$) puisse être modulé avec ces données au niveau du côté primaire (9) du transformateur (2) et à ce que les données puissent donc être transmises par l'intermédiaire du transformateur.

10. Source de courant de soudure par résistance (1) selon la revendication 9, **caractérisée en ce que** le dispositif de commande (26) est relié avec l'inverseur (8) de façon à ce que les impulsions de commande (29) puissent être générées par l'actionnement d'au moins un élément de commutation inverseur (S1, S2, S3, S4).

11. Source de courant de soudure par résistance (1) selon la revendication 9 ou 10, **caractérisée en ce qu'**au moins un élément de commutation (S7, S8, S9) et une bobine (L2) sont prévus pour l'augmentation de l'impédance (23) appliquée au côté primaire (9) du transformateur (2) en mode de transmission de données (24).

12. Source de courant de soudure par résistance (1) selon l'une des revendications 9 à 11, **caractérisé en ce que** la fréquence de commutation (37) des impulsions de commande (29) pour l'initialisation du mode de transmission de données (24) est augmentée par rapport à la fréquence de commutation (34) des impulsions de soudure (20), plus particulièrement jusqu'à 20 kHz à 50 kHz et/ou les impulsions de commande (29) pour l'initialisation du mode de transmission de données (24) présentent une durée d'impulsion (38) prédéfinie, plus particulièrement de 2 $\mu$s à 25 $\mu$s.

13. Source de courant de soudure par résistance (1) selon l'une des revendications 9 à 12, **caractérisé en ce que**, au niveau du côté secondaire (11) du transformateur (2), est prévu un dispositif (39) pour la comparaison du courant ($I_{GL}$) au niveau du côté secondaire (11) du transformateur (2) avec une valeur limite.

14. Source de courant de soudure par résistance (1) selon l'une des revendications 9 à 13, **caractérisé en ce que** le dispositif de commande (26) est conçu pour la formation d'impulsions de commande (29) de différentes durées d'impulsions (38) en mode de transmission de données (24) pour la transmission (28) de données du côté primaire (9) au côté secondaire (11) du transformateur (2).

15. Source de courant de soudure par résistance (1) selon l'une des revendications 9 à 14, **caractérisé en ce que**, au niveau du côté secondaire (11) du transformateur (2), sont prévus des commutateurs sensibles à la température (40) et/ou des capteurs de température (19).

Fig.1 (Stand der Technik)

EP 3 374 119 B1

Fig.2

# Fig.3

Fig.4

Fig.5

EP 3 374 119 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005056621 A1